# EUROPEAN PATENT APPLICATION

(11) **EP 1 655 977 A1**
(43) Date of publication of application: **10.05.2006**
(21) Application number: 04026321.2
(22) Date of filing: 05.11.2004
(51) Int. Cl.: H04Q 7/28, H04L 12/56

(54) **Protocol conversion in a Push-to-Talk (PTT) over cellular (PoC) communication system**

(71) Applicant: SIEMENS AKTIENGESELLSCHAFT, 80333 München (DE)
(72) Inventor: Auffret, Jean-Marc, 22140 Pluzunet (FR); Jestin, Jean-Francois, 22300 Lannion (FR); Richomme, Morgan, 22300 Lannion (FR); Samandi, Sami, 22300 Lannion (FR)

(57) **Abstract**

According to a method for operating a push-to-talk session between at least a first terminal (UE1) and a second terminal (UE2, T) by use of a push-to-talk server (PTTSv) of a cellular radio communications system, data of the push-to-talk session is transferred via the push-to-talk server (PTTSv) from the first terminal (UE1) to the second terminal (UE2, T) and vice versa. According to the invention the push-to-talk server (PTTSv) processes data of the push-to-talk session in at least a first data format (FSIP, FRTP, FRTCP), the cellular radio communications system receives data (D2, D3C, D3U, VM, SD) of the push-to-talk session from the second terminal (UE2, T) in at least a second data format (FSMS, FSS7, TDM) and an interworking unit (IWU) converts data from the second data format (FSMS, FSS7, TDM) into the first data format (FSIP, FRTP, FRTCP) and vice versa.

## Description

Method for operating a push-to-talk session between at least a first and a second terminal by use of a push-to-talk server of a cellular radio communication system as well as an interworking unit

The invention concerns a method for operating a push-to-talk session between at least a first an a second terminal by use of a push-to-talk server of a cellular radio communication system as well as an interworking unit.

A push-to-talk service is a half duplex communications service that works as a walkie-talkie-service for groups of mobile terminals. If a push-to-talk service is provided via a push-to-talk server of a cellular radio communications system it is called PoC-service (PoC: push-to-talk over cellular). By use of its mobile terminal, e.g. a mobile phone, a user of the push-to-talk service selects a conversation partner or a conversation group and can talk to the conversation partner or the conversation group when he pushes a specific button on his mobile terminal.

A mobile terminal has to fulfil special requirements to be able to use a PoC-service. It has to comply with a respective PoC-standard. So far a draft version of a PoC-standard exists. Documents concerning the architecture, control plane and user plane of the PoC-standard are published by the Open Mobile Alliance (OMA) and can for instance be received using the following internet address:
http://member.openmobilealliance.org/ftp/public documents/POC /Permanent documents/. The PoC-standard documents "Push to talk over Cellular (PoC)- Architecture", Draft Version 1.0, October 2004 and "OMA PoC User Plane", Draft Version 1.0.9, October 2004, are incorporated herein by reference. Mobile terminals which are not compliant with the PoC-standard are not able to participate in a push-to-talk session during which data is exchanged between one or several mobile terminals which are members of a conversation group.

An object of the present invention is to provide a method for operating a push-to-talk session between at least two terminals by use of a push-to-talk server of a cellular radio communications system, wherein at least one of the two terminals is not compliant with a PoC-standard.

The object is achieved by a method as well as an interworking unit according to the independent claims.

Advantageous embodiments are subject matter of dependent claims.

According to the inventive method for operating a push-to-talk session between at least a first terminal and a second terminal by use of a push-to-talk server of a cellular radio communications system, data of the push-to-talk session is transferred via the push-to-talk server from the first terminal to the second terminal and vice versa. According to the invention the push-to-talk server processes data of the push-to-talk session in at least a first data format, the cellular radio communications system receives data of the push-to-talk session from the second terminal in at least a second data format and an interworking unit converts data from the second data format into the first data format and vice versa.

The invention enables terminals which are not able to transmit data in the first data format to participate in a push-to-talk session by means of the interworking unit which converts data from that second data format into the first data format which is used by a push-to-talk server for data processing. For the push-to-talk server the interworking unit acts as a terminal that transmits data in the first data format, i.e. the interworking unit emulates a terminal transmitting data according to a PoC-standard.

In an advantageous embodiment the cellular radio communications system receives data of the push-to-talk session from the first terminal in the first data format and provides the received data to the push-to-talk server. This embodiment gives the possibility to operate the push-to-talk session between the first terminal, which is compliant with a PoC-standard and transmits data in the first data format for being processed without any conversion by the push-to-talk server, and the second terminal, which transmits data in the second data format which is different from the first data format and which has to be converted in the interworking unit before being provided to the push-to-talk server.

Naturally, the cellular radio communications system can also receive data of the push-to-talk session from the first terminal in a third data format, which is not compliant with a PoC-standard. In this case, the interworking unit or another interworking unit is capable of converting data from the third data format into the first data format and provides the converted data to the push-to-talk server. In such an alternative embodiment the push-to-talk session is operated between the first and the second terminal both transmitting data in data formats different from the first data format which is used by the push-to-talk server for data processing. It is therefore possible to operate a push-to-talk session between two terminals which are both not compliant with a PoC-standard that defines the first data format for data processing by the push-to-talk server.

Advantageously the interworking unit interconnects the second terminal and the push-to-talk server and converts data received in the first data format from the push-to-talk server into the second data format and transfers the converted data to the second terminal.

Preferably the interworking unit converts data coming from the second terminal in the second data format into the first data format and provides the converted data to the push-to-talk server.

Preferably the first data format is a push-to-talk format e.g. according to the PoC-standard published by the Open Mobile Alliance OMA in October 2004.

In one embodiment of the invention the data in the second and/or third data format is a short message service message or a multimedia messaging service message or a voice over internet protocol message. Terminals can participate in a push-to-talk session via SMS, MMS and VoIP (Voice over IP).

Advantageously a conversion of short message service messages from text format to speech format and vice versa takes place in the interworking unit.

It is further advantageous, if the second terminal includes a target information identifying the first terminal as target of the push-to-talk session in a short message service message or multimedia messaging service message.

In another embodiment the data in the second data format is a signalling system number 7 message and/or speech data in a data format used for full duplex or half duplex speech connections in a communication system to which the second terminal is attached. In this embodiment the interworking unit converts, i.e. translates, signalling data from the signalling system number 7 format and/or speech data from a speech format used by the second terminal into the respective signalling format and/or speech formats used according to the first data format of the PoC-standard and vice versa.

Advantageously the second terminal uses a push-to-talk service via a web interface to define the push-to-talk session, defining at least a target information identifying the first terminal as target of the push-to-talk session. According to this embodiment the second terminal initiates the push-to-talk session either by use of a functionality of the push-to-talk service or by detecting an operation of a predefined button connected to the second terminal. After the initiation of the push-to-talk session the second terminal receives a call and after acceptance of the call a connection to the first terminal is established via the interworking unit and the push-to-talk server.

In another embodiment the push-to-talk session is initiated by the first terminal. The method according to this embodiment advantageously comprises receiving via the push-to-talk server at the interworking unit a call set-up and/or a floor control indication from the first terminal, converting the call set-up and/or the floor control indication into the second data format, initiating a call at the second terminal using the converted call set-up and/or floor control indication and after acceptance of the call transmitting from the interworking unit to the second terminal further data in the second data format, the further data being converted from data in the first data format, which was received from the first terminal via the push-to-talk server.

Advantageously the floor is taken during the push-to-talk session for the second terminal by detection of the operation of a button connected to the second terminal or by detection of a predefined voice message received from the second terminal. After detection of the operation of the button or of the predefined voice massage, e.g. the interworking unit generates signals and transmits them to the push-to-talk server according to the PoC-standard to take the right for the second terminal to be the terminal which transmits data on the half duplex connection used for the push-to-talk session, thus avoiding collisions with data the first terminal has to transmit.

In any case it is useful to provide via a web server a monitoring service of the push-to-talk session to the first and/or the second terminal.

It is an advantage of the invention to provide a method according to one or all of the embodiments mentioned before in which the first terminal is operated in a first communications system according to a first standard and the second terminal is operated in a second communications system according to a second standard.

Advantageously data in at least the first data format is transferred according to the Session Initiation Protocol SIP and/or the Realtime Transfer Protocol RTP and/or the Realtime Control Protocol RTCP.

Advantageously data of the push-to-talk session is speech representing data.

The inventive interworking unit shows all features that are necessary for performing the inventive method. Particularly the interworking unit can show respective means for performing the specific steps of the inventive method or the specific method options.

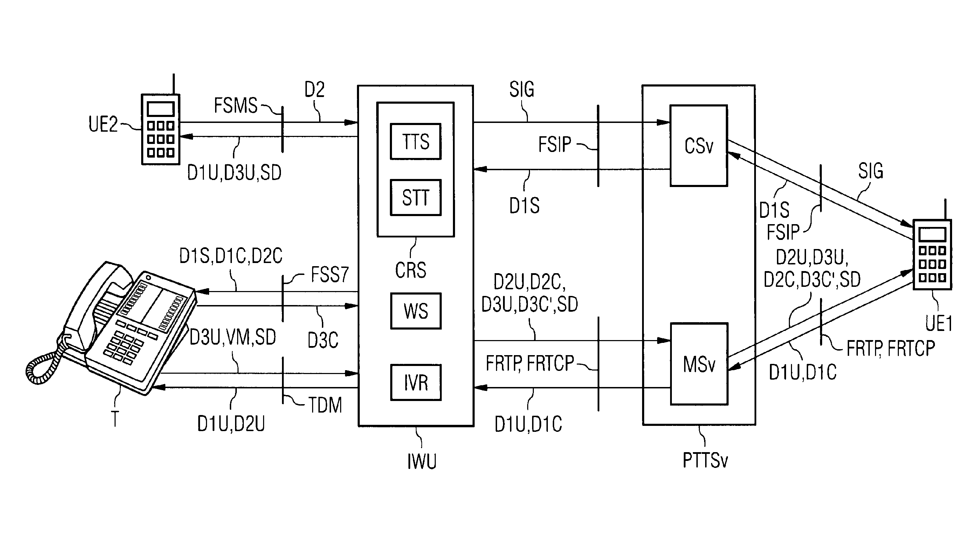

In the following the invention is described according to embodiments shown in the figure.

A terminal is for instance a mobile radio terminal, particularly a mobile phone or a flexible of fixed device, for transmission of picture data and/or sound data, for fax, short message service (SMS) messages and/or E-mail messages, and/or for internet access. It is within the scope of the invention to regard also a device used in a half duplex Private Mobile Radio system, for instance a walkie-talkie, as a terminal.

The invention can advantageously be used in any kind of radio communications system. Radio communications systems are systems in which a data transmission between terminals is performed over an air interface. The data transmission can be both bidirectional and unidirectional. Radio communications systems are particularly cellular radio communication systems, e.g. according to the GSM (Global System for Mobile Communications) standard or the UMTS (Universal Mobile Telecommunication System) standard. Also future mobile radio communications systems, e.g. according to the fourth generation, as well as ad-hoc-networks shall be understood as radio communication systems. Radio communication systems are also wireless local area networks (WLAN) according to standards from the Institute of Electrical and Electronics Engineers (IEEE) like 802.11a-i, HiperLAN1 and HiperLAN2 (High Performance Radio Local Area Network) as well as Bluetooth-Networks.

The figure shows schematically data flows and connections used for operating a push-to-talk session according to one embodiment of the invention. A first terminal UE1, which is for instance operated in a first communications system according to the UMTS standard, is compliant with the PoC-standard defined by the Open Mobile Alliance (OMA) and therefore transmits data during push-to-talk sessions in a first data format which is the push-to-talk format according to the PoC-standard. The first data format consist of three data formats:
1) a signalling format FSIP according to the Session Initiation Protocol (SIP) used for signalling data,
2) a speech format FRTP used for transmitting speech data according to the Realtime Transport Protocol (RTP) and
3) a control format FRTCP used for transmitting control data according to the Realtime Control Protocol RTCP.

Signalling data is used for initiating (setting up) a push-to-talk session and control data is used for taking the floor during an active push-to-talk session.

A second terminal UE2 is also connected to the first communications system but not compliant with the PoC-standard and therefore not able to receive signalling data in the signalling format FSIP and/or speech data in the speech format FRTP and/or control data in the control format FRTCP. But the second terminal UE2 is able to receive and send text messages, e.g. short message service (SMS) messages, in a SMS format FSMS as well as multimedia messaging service (MMS) messages using a respective MMS format.

A third terminal T is connected to a second communications system, for example to a public switched telephone system (PSTN) and is only able to process signalling data in the signalling system number 7 (SS7) format FSS7 and speech data in a time division multiplex format TDM.

To initiate a push-to-talk session with the second terminal UE2 and the third terminal T the first terminal UE1 transmits first signalling data D1S to a control server CSv which is part of a push-to-talk server PTTSv. The first signalling data D1S contains for instance a call-setup according to the PoC-standard. The push-to-talk server PTTSv is part of the core network of the first communications system, it is compliant with the PoC-standard and it serves for managing push-to-talk sessions.

The control server CSv transmits the first signalling data D1S in the signalling format FSIP to an interworking unit IWU. The interworking unit is provided with a Conversion-Reception-Sending-Unit CRS, which is a combination of a conversion unit, a reception unit and a sending unit, used for receiving, sending and converting of all kinds of data formats. Part of the Conversion-Reception-Sending-Unit CRS are also a text-to-speech conversion unit TTS and a speech-to-text conversion unit STT. The interworking unit IWU takes all necessary control functions for the second terminal UE2 that have to be taken according to the push-to-talk standard. The interworking unit IWU initiates for instance the push-to-talk session with the first terminal UE1 triggered by the first signalling data D1S and takes the floor for the second terminal UE2 during the push-to-talk session triggered by a respective text message received from the second terminal UE2. Naturally, the interworking unit IWU can initiate a push-to-talk session triggered by a respective text message received from the second terminal UE2. The received text message contains target information identifying the terminals meant for taking part in the push-to-talk session. For instance, the target information contains the destination addresses of the respective terminals. Further the interworking unit IWU converts the first signalling data D1S from the signalling format FSIP into the signalling number 7 format FSS7 and provides it to the third terminal T, thus initiating for instance a call at the third terminal T.

After initiation of the push-to-talk session, the first terminal UE1 takes the floor by transmitting first control data D1C as floor control indication to a media server MSv which is also part of the push-to-talk server PTTSv using the control format FRTCP. Further the first control data D1C is transmitted from the media server MSv in the control format FRTCP to the interworking unit IWU. The interworking unit IWU converts the first control data D1C from the control format FRTCP into the signalling system number 7 format FSS7 and initiates a call at the third terminal T using the converted first control data D1C. After the third terminal T accepted the call, the first terminal transmits first speech data D1U in the speech format FRTP via the media server MSv to the interworking unit IWU. The interworking unit IWU converts the first speech data D1U from the speech format FRTP into the time division multiplex format TDM and transmits it to the third terminal T. Further the interworking unit IWU converts the first speech data D1U by use of the speech-to-text conversion unit STT from the speech format FRTP into a text message using the SMS format FSMS and transmits the text message to the second terminal UE2.

During the course of the push-to-talk session the interworking unit IWU further receives a text message D2 in the SMS format FSMS from the second terminal UE2. The text message D2 contains a message part and target information, identifying the first terminal UE1 and the third terminal T as targets of the message part of the text message D2. The interworking unit reads and processes the target information, e.g. destination addresses, and generates second control data D2C to take the floor for the second terminal UE2 and therefore to enable the transfer of the message part of the text message D2 to the first terminal UE1 and the third terminal T. The second control data D2C is transferred in the control format FRTCP via the media server MSv to the first terminal UE1 and is also transferred to the third terminal T in the signalling system number 7 format FSS7.

After the floor has been taken for the second terminal UE2 according to the PoC-standard, the interworking unit IWU transmits second speech data D2U, which has been converted from the message part of the text message D2 using the text-to-speech conversion unit TTS, via the media server MSV to the first terminal UE1 using the speech format FRTP and to the third terminal T using the time division multiplex format TDM.

Further during the course of the push-to-talk session the interworking unit IWU receives floor control data D3C in the signalling system number 7 format FSS7 from the third terminal T, which is used to signal that the third terminal T wants to take the floor and that the first terminal UE1 and the second terminal UE2 are meant for receiving third speech data D3U from the third terminal T. Alternatively, the floor control data D3C can be a predefined voice message (e.g. "take floor") which is signalled using the time division multiplex format TDM. After the floor control data D3C has been evaluated by the interworking unit IWU for instance by using an Interactive Voice Response [IVR] functionality, which is able to evaluate DTMF tones and/or voice messages, the interworking unit IWU generates third control data D3C' and transfers it via the media server MSv to the first terminal UE1 using the control format FRTCP. Additionally, the interworking unit IWU takes all necessary control function for the second terminal UE2 according to the PoC-standard. The interworking unit IWU then receives the third speech data D3U from the third terminal T in the time division multiplex format TDM. The interworking unit IWU converts the third speech data D3U with the speech-to-text conversion unit STT into a text message which is transmitted in the SMS format FSMS to the second terminal UE2. Further, the interworking unit IWU converts the third speech data D3U from the time division multiplex format TDM into the first speech format FRTP and transmits it via the media server MSv to the first terminal UE1.

The third terminal T itself is able to initiate a push-to-talk session by using for instance a push-to-talk service via a web interface, for instance via an internet protocol (IP) like HTTP (Hipertext Transfer Protocol) or via wireless application protocoll (WAP), to define the push-to-talk session. The third terminal T defines for instance the first terminal UE1 and the second terminal UE2 as targets of the push-to-talk session. In the following, initiation of the push-to-talk session is triggered by detection of an operation or by detection of a predefined voice message (e.g. "initiate session") of the user of the third terminal T. The detected operation could either be the operation of a predefined button connected to the third terminal T, generating e.g. a DTMF [dual tone multi frequency] tone, or the operation of a functionality of the push-to-talk service, for instance the activation of a specific menu entry provided by the push-to-talk service.

The interworking unit IWU receives for instance a voice message VM in the time division multiplex format TDM from the third terminal T and by evaluating the voice message VM the interworking unit IWU detects "initiate session" as content of the voice message VM. Because of the predefined content "initiate session", the interworking unit IWU knows that a push-to-talk session has to be initiated and therefore sends a call to the third terminal T. After detection of the acceptance of the call a connection is established between the third terminal T and the interworking unit IWU. The interworking unit IWU further generates and sends all necessary signalling data SIG in the signalling format FSIP according to the PoC-standard via the control server CSv to the first terminal UE1 to initiate the push-to-talk session. Finally, a connection is established with the first terminal UE1 via the push-to-talk server PTTSv and speech data SD received by the interworking unit IWU from the third terminal T in the time division multiplex format TDM is converted into the speech format FRTP and transferred to the first terminal UE1 via the media server MSv. Further the received speech data SD is converted by the speech-to-text conversion unit STT into a text message in the SMS format FSMS and the text message is sent to the second terminal UE2.

The interworking unit IWU further provides a web server WS, either integrated in the interworking unit IWU as shown in the figure or as a separate unit connected to the interworking unit IWU (not shown in the figure). The web server WS is used to provide a monitoring service for the push-to-talk session to the first, the second and the third terminal UE1, UE2, T.

The push-to-talk server PTTSv and the interworking unit IWU can be realised by a respective software program running on a computer. The interworking unit IWU can be a part of the software program realising the push-to-talk server PTTSv, for instance as a sub routine, as well as the it can be a separate software program. Software programs realising the interworking unit IWU and the push-to-talk server PTTSv can run either on the same or on different computers. The interworking unit IWU can be localized in a switching unit which belongs for instance to the first or the second communications system. The push-to-talk server PTTSv is part of the first communications system and can for instance also be localized in a switching unit which could be the same switching unit or a different switching unit as the switching unit that hosts the interworking unit.

The first, second and third terminal UE1, UE2 and T can access the web-server using for instance HTTP or WAP.

Instead of using text messages according to the SMS format FSMS the second terminal UE2 could alternatively use MMS messages to participate in the push-to-talk session. In this case an MMS message contains a target information identifying the third terminal T and/or the first terminal UE1 as targets for the push-to-talk session. The interworking unit IWU receives MMS messages as audio files for instance in WAV (also known as RIFF WAVE, RIFF: Resource Interchange Format) or MP3 (MP3: MPEG-1 Audio Layer-3 [MPEG: Moving Picture Experts Group]) format and converts the audio files into the time division multiplex format TDM and/or the speech format FRTP.

The interworking unit IWU is constructed to convert any data format that is different from a push-to-talk format used by the push-to-talk server into the push-to-talk format (e.g. the signalling format FSIP and/or the speech format FRTP and/or the control format FRTCP) and vice versa. The interworking unit IWU is for instance capable of converting voice over IP (VoIP) signalling data according for instance to the H.323 standard (an international standard of the ITU [International Telecommunication Union]) into the signalling format FSIP and vice versa. Further, the interworking unit IWU is capable of converting signalling data as well as speech data and/or control data from and/or into formats used by walkie-talkies e.g. in Private Mobile Radio systems.

It is also within the scope of the invention that different terminals use different interworking units for data conversion. For instance, the interworking unit IWU can inventively be used to convert data received from or sent to the second terminal UE2 while a second interworking unit is located in the second communications system and is inventively used to convert data received from or sent to the third terminal T.

It is also within the scope of the invention that two or more interworking units are provided within the first communications system and that a terminal is connected to at least two of these interworking units.

In push-to-talk sessions according to the PoC-standard, different terminals can be assigned to different push-to-talk servers, wherein each terminal uses the assigned push-to-talk server to initiate a push-to-talk session. During initiation of a push-to-talk session signalling data is transferred from the push-to-talk server assigned to the terminal that initiates the push-to-talk session to the affected terminals via the push-to-talk servers that are assigned to the affected terminal using the signalling format FSIP. After the initiation procedure is completed, the push-to-talk server assigned to the terminal that initiated the push-to-talk session further controls the push-to-talk session and exchanges speech data and/or control data between the affected terminals, using the speech format FRTP and/or the control format FRTCP, without involving other push-to-talk servers. If necessary the speech data and/or the control data is converted in one or more interworking units.

For clarity reasons, units that are part of access networks and core networks of the first and second communications system and that are used for instance to connect the first, second and third terminal UE1, UE2, T to the interworking unit IWU or the push-to-talk server PTTSv, are well known to someone skilled in the art and are not shown in the figure. Such entities are for instance base stations, radio network controller (RNC), switches and other units used to operate the first and second communications systems and used to operate push-to-talk sessions according to the PoC-standard.

## Claims

1. Method for operating a push-to-talk session between at least a first terminal (UE1) and a second terminal (UE2, T) by use of a push-to-talk server (PTTSv) of a cellular radio communications system,
- wherein data of the push-to-talk session is transferred via the push-to-talk server (PTTSV) from the first terminal (UE1) to the second terminal (UE2, T) and vice versa,
- wherein the push-to-talk server (PTTSv) processes data of the push-to-talk session in at least a first data format (FSIP, FRTP, FRTCP),
- wherein the cellular radio communications system receives data (D2, D3C, D3U, VM, SD) of the push-to-talk session from the second terminal (UE2, T) in at least a second data format (FSMS, FSS7, TDM),
- and wherein an interworking unit (IWU) converts data from the second data format (FSMS, FSS7, TDM) into the first data format (FSIP, FRTP, FRTCP) and vice versa.

2. The method according to claim 1, further comprising
the cellular radio communications system receiving data (D1U, D1C, D1S) of the push-to-talk session from the first terminal (UE1) in the first data format (FSIP, FRTP, FRTCP) and providing the received data to the push-to-talk server (PTTSv).

3. The method according to claim 1 or 2, further comprising
the interworking unit (IWU) interconnecting the second terminal (UE2, T) and the push-to-talk server (PTTSv) and converting data (D1U, D1C, D1S) received in the first data format (FSIP, FRTP, FRTCP) from the push-to-talk server (PTTSv) into the second data format (FSMS, FSS7, TDM) and transferring the converted data to the second terminal (UE2, T).

4. The method according to claim 1, 2 or 3, further comprising
the interworking unit (IWU) converting data (D2, D3C, D3U, VM, SD) coming from the second terminal (UE2, T) in the second data format (FSMS, FSS7, TDM) into the first data format (FSIP, FRTP, FRTCP) and providing the converted data (D2U, D2C, D3U, D3C', SIG, SD) to the push-to-talk server (PTTSv).

5. The method according to claim 1, 2, 3 or 4, further comprising
the first data format (FSIP, FRTP, FRTCP) being a push-to-talk format.

6. The method according to claim 1, 2, 3, 4 or 5, further comprising
the data in the second data format (FSMS) being a short message service message (D2) or a multimedia messaging service message or a voice over internet protocol message.

7. The method according to claim 6, further comprising conversion of short message service messages (D2) from text format to speech format and vice versa in the interworking unit (IWU).

8. The method according to one of claims 1 - 7, further comprising
the second terminal (UE2) including a target information identifying the first terminal (UE1) as target of the push-to-talk session in a short message service message (D2) or multimedia messaging service message.

9. The method according to one of claims 1 - 5, further comprising
the data in the second data format (FSS7, TDM) being a signalling system number 7 message (D3C) and/or speech data (D3U, VM, SD) in a data format used for full duplex or half duplex speech connections in a communications system to which the second terminal (T) is attached.

10. The method according to one of claims 1 - 5 or 9, further comprising the second terminal (T)
- using a push-to-talk service via a web interface to define the push-to-talk session, defining at least a target information identifying the first terminal (UE1) as target of the push-to-talk session,
- initiating the push-to-talk session either by use of a functionality of the push-to-talk service or by detecting an operation of a predefined button connected to the second terminal (T),
- receiving a call at the second terminal (T) after initiation,
- and establishing a connection to the first terminal (UE1) after acceptance of the call via the interworking unit (IWU) and the push-to-talk server (PTTSv).

11. The method according to one of claims 1 - 5, 9 or 10, further comprising
- receiving via the push-to-talk server (PTTSv) at the interworking unit (IWU) a call set-up (D1S) and/or a floor control indication (D1C) from the first terminal (UE1),
- converting the call set-up (D1S) and/or the floor control information (D1C) into the second data format (FSS7),
- initiating a call at the second terminal (T) using the converted call set-up (D1S) and/or floor control indication (D1C),
- and after acceptance of the call transmitting from the interworking unit (IWU) to the second terminal (T) further data (D1U) in the second data format (TDM), the further data (D1U) being converted from data (D1U) in the first data format (FRTP), which was received from the first terminal (UE1) via the push-to-talk server (PTTSv).

12. The method according to one of the preceding claims, further comprising
taking the floor during the push-to-talk session for the second terminal (T) by detection of the operation of a button connected to the second terminal (T) or by detection of a predefined voice message (VM) received from the second terminal (T).

13. The method according to one of the preceding claims, further comprising
providing via a web server (WS) a monitoring service of the push-to-talk session to the first terminal (UE1) and/or the second terminal (UE2, T).

14. The method according to one of the preceding claims, further comprising
the first terminal (UE1) being operated in a first communications system according to a first standard and the second terminal (T) being operated in a second communications systems according to a second standard.

15. The method according to one of the preceding claims, further comprising
data (D1S, D1U, D1C) in the at least first data format (FSIP, FRTP, FRTCP) being transferred according to the Session Initiation Protocol SIP and/or the Realtime Transfer Protocol RTP and/or the Realtime Control Protocol RTCP.

16. The method according to one of the preceding claims, further comprising
data of the push-to-talk session being speech representing data (D1U, D3U, VM, SD).

17. Interworking unit (IWU) for a cellular radio communications system, comprising
- a receiving unit (CRS) for receiving data (D1U, D1C, D1S) of a push-to-talk session in a first data format (FSIP, FRTP, FRTCP, FSMS, FSS7, TDM) from a first terminal (UE1, UE2, T),
- a conversion unit (CRS) for converting data from the first data format (FSIP, FRTP, FRTCP, FSMS, FSS7, TDM) into a second data format (FSIP, FRTP, FRTCP, FSMS, FSS7, TDM),
- a sending unit (CRS) for sending the converted data in the second data format (FSIP, FRTP, FRTCP, FSMS, FSS7, TDM) to a second terminal (UE1, UE2, T).

18. Interworking unit according to claim 17, further comprising
the receiving unit (CRS) being connected to a push-to-talk server (PTTSv), which processes data in the first data format (FSIP, FRTP, FRTCP).

19. Interworking unit according to claim 18, further comprising
the sending unit (CRS) being connected to a push-to-talk server (PTTSv), which processes data in the second data format (FSIP, FRTP, FRTCP).

20. Interworking unit according to claim 18, 19, or 20, further comprising
the receiving or sending unit (CRS) being constructed to process a push-to-talk format as the first or the second data format (FSIP, FRTP, FRTCP).
